# EUROPEAN PATENT SPECIFICATION

(11) **EP 1 593 489 B1**
(45) Date of publication and mention of the grant of the patent: **28.11.2007**
(21) Application number: 04380101.8
(22) Date of filing: 03.05.2004
(51) Int. Cl.: B32B 5/26, B32B 27/12, B60R 13/02

(54) **Manufacturing process of a headliner for interior linings**
Verfahren zur Herstellung von einem Dachhimmel für Kraftfahrzeug-Innenverkleidungen
Procédé de fabrication de garniture de pavillon pour le revêtement intérieur des véhicules

(43) Date of publication of application: 09.11.2005
(73) Proprietor: Grupo Antolín Ingeniería, S.A., 09007 Burgos (ES)
(72) Inventor: Ariznavarreta Esteban, Anselmo, 09190 Burgos (ES); Mirones Gómez, Ramón, 09007 Burgos (ES)
(74) Representative: Esteban Perez-Serrano, Maria Isabel

(56) References cited:
- WO-A-03/086752
- US-A- 4 828 910
- US-A- 6 156 682
- US-B1- 6 297 176
- PATENT ABSTRACTS OF JAPAN vol. 2000, no. 25, 12 April 2001 (2001-04-12) & JP 2001 232708 A (TAISHIN KOGYO KK; TOYODA SPINNING & WEAVING CO LTD; AISEI KK; TOYOTA T), 28 August 2001 (2001-08-28)

## Description

The present invention refers to a manufacturing process of a headliner for automotive vehicle interiors, and it more specifically refers to the manufacture of headliners obtained from a stratified material including a central layer of a low density fibrous material.

### Background of the Invention

Automotive vehicle headliners must have good thermal insulation, as well as acoustic absorption and insulation, features. On the other hand, the mechanical requirements which are demanded for these products are increasing daily, which has caused great interest in finding efficient and economically cost-effective manufacturing processes.

There are currently several background documents for obtaining headliners disclosed in US patent numbers 4828910, 4840832, 6291370, 6124222 and 6156682; EP0832787 and EP1199154; and ES2157725. The most significant aspects of the most relevant patents will be summarized below.

US 6124222: the stratified material is composed of two mats of binder fibers and non-binder fibers, which constitute the central layer. Then, the rest of the layers constituting the stratified material (reinforcements, linings,...) are applied, and said stratified material is then heated to activate the adhesive layers and bind all the layers. In a subsequent step, said stratified material is formed in a mold.

This process obliges the installation of a furnace and press in the production plant, considerably increasing the space required for manufacturing the headliner and making the process economically unappealing.

EP1199154: In this case, the central layer of the stratified material is formed by several foam layers on which the rest of the layers making up said stratified material (reinforcements, linings,...) are placed.

The use of foam to form the central layer results in a headliner that is scarcely rigid in the areas of small thicknesses. Therefore, the areas of the periphery are especially susceptible to breaking during the handling of the headliner due to the small thicknesses of these areas.

Another problem presented by foam headliners occurs during their assembly due to the fact that it is occasionally necessary to fold it to introduce it in the body cavity having smaller dimensions than the headliner. When the headliner is folded, due to its fragility, the breaking of the central foam core occurs, leaving unwanted marks on the visible side.

Additionally, the forms that can be obtained using headliners manufactured with foam are limited, taking into account the possibilities offered by other materials.

US 6156682: in this case, the central core of the stratified material is formed by polyester fibers with different grammages on which a thermosetting resin is subsequently applied and then the rest of the layers constituting said stratified material (reinforcements, linings, ...).

This process always starts from a single mat for forming the central core which can in turn be formed by layers of different grammages. These layers have been previously bound by means of a punching or thermal binding process, so that at the beginning of the manufacturing process of the headliner, they start from a single mat.

The use of fibers of different features makes the headliner more expensive due to using different references, and furthermore it is more difficult to control the binding thereof.

It is known in the state of the Art the manufacturing process of a headliner as the one disclosed in US 6156682 wherein a laminated type panel structure is disclosed, being composed of a core made of bonded fibers, incuding additional reinforcement layers. In the formation of the central layer there is a resin application process. Nevertheless this process involves some drawbacks. For example with the process disclosed the amount of resin applied is not under control and optimised, not being assured that the resin reaches the internal central zone or core, and it is uniformly distributed inside the central layer. So the main aim of the present invention is to overcome the afore mentioned drawbacks designing a process wherein the amount of resin applied is clearly reduced, being optimised, and under control, and where we assure that resin reaches the zone or core of the layers, being unifomily distributed.

### Description of the Invention

The present invention has the object of eliminating the drawbacks set forth, simplifying the manufacturing process, allowing obtaining a final product with better mechanical features, while at the same time manufacturing costs are reduced.

According to the present invention, the central layer is formed by at least two low density fibrous mats (200-600 g/m² of surface weight), preferably with uniform grammage. In comparison with the obtained foam-based headliners, the obtained material has greater rigidity in the areas of less thickness. This implies a more resistant headliner against the forces caused by the handling thereof, and furthermore provides greater freedom of forms.

In the process of the present invention, a thermosetting resin is applied on each one of the surfaces of the successive fibrous mats forming the central layer, for example with a gluing roller, such that the mat is only superficially impregnated; then, reinforcement layers based on a fibrous material on at least one of the sides of the central layer can be applied once the overlay of several fibrous material mats has been formed; then a protective layer is applied on at least one of the sides of the stratified material, defining or forming a non-visible surface of said stratified material; and finally, a decorative lining or layer is applied on the opposite side to define or form a visible surface; a barrier layer can optionally be applied before applying the decorative lining layer to protect said decorative lining layer.

The process of the present invention can be carried out automatically in a continuous assembly line, due to the fact that the fibrous mats can be stored on reels, allowing the continuous feed of said line. The same does not occur in processes having a central layer made up of foam, in which it is necessary to cut said foams at an independent station and then carry them to the headliner production line.

According to the present invention, the thermosetting resin is applied by means of a gluing roller or other similar systems, such that the impregnation of each one of the fibrous mats forming the central layer is only superficial. This process allows for the subsequent binding and forming of said mats in a hot press, forming the central layer in an almost continuous manner due to the fact that the action of the pressure causes the penetration of the resin towards the inside of the mats. The central layer obtained thereby, is similar to that which would have been obtained if a single fibrous material mat had been completely impregnated using a bath, while at the same time using smaller amounts of said thermosetting resin than those which would be used by completely impregnating a single mat. As a result, a much smaller amount of the thermosetting resin is applied, and at the same time, a stratified material is obtained at the end of the process which has mechanical properties comparable to those disclosed in the state of the art, with a significant economic saving.

Optionally, the coinciding position overlay of all the fibrous material mats (1) forming the central layer (2) can be achieved by successively folding a single fibrous material mat (1) over itself, which fibrous material is cut in at least one direction parallel to the fold axis in a subsequent step, according to the desired size. Thus a central layer (2) is obtained that is equal to the one obtained according to the process disclosed in the previous paragraphs, in which each fibrous material mat (1) came from an independent reel.

The reinforcement layers can be artificial fibers such as glass fibers, or natural fibers such as jute, hemp, linen, sisal, etc., with which the same reinforcing function is obtained.

Optionally, before applying the decorative lining layer, the stratified material can be made to pass through press rolls improving the impregnation and distribution of the previously applied resin. This can also be done before subjecting the stratified material to the forming operation, once all the layers making up the headliner have been applied.

Then, once the resin is applied on the central layer and, where applicable, the reinforcement layer or layers are applied, a protective layer is applied which will define the non-visible side. This layer adheres with the same resin that is used for binding the reinforcement layer, taking advantage that the latter is permeable and, therefore, that the adhesive can pass through it. The protective layer can be of very different materials, in both composition and in structure; for example, it can be constituted based on paper, vegetable textile fabrics, plastic layers, etc.

The decorative lining layer is applied on the opposite surface to define the visible side. According to the type of decorative lining used, in certain cases it will be necessary to incorporate the barrier layer, which can be an adhesive strip or sheet, before the decorative lining layer, and which will prevent the adhesive from passing through the decorative lining, altering the final appearance thereof.

In the event of not using a barrier layer, the resin used for adhering the reinforcement layer also serves for binding the decorative layer. In the event of a barrier layer being applied, said barrier layer can be constituted of a thermoplastic material, such that the binding of the decorative lining layer is carried out due to the melting of the barrier layer itself by means of the application of heat in any of the previous steps of the present process.

Once the stratified material is obtained, it is introduced in a hot press where, simultaneously, the polymerization process of the resins adhering the layers making it up begins, and it is formed into its definitive shape. The result is the consolidation of the internal structure due to the combined action of the pressure and temperature inside a mold, giving definitive shape to the headliner to be obtained. In other words, unlike what occurs in US patent 6124222, the forming of the stratified material and the binding of the layers making it up, are carried out simultaneously in the press. As a furnace which melts the adhesive and causes the binding of the different layers is not needed prior to the press, significant space saving is achieved in the plant.

All the features and advantages set forth, as well as others pertinent to the invention, can be better understood with the following description of an embodiment, made with the aid of the attached drawings in which:
Figure 1 shows a schematic sectional view of the composition of the stratified material from which the headliner of the invention is obtained.
Figure 2 shows a schematic view of the manufacturing process of the headliner of the invention.

This stratified material comprises a central layer (2), a reinforcement layer (4), a protective layer (7) applied on one of the reinforcement layers (4), defining a non-visible side of the headliner, a barrier layer (5), situated on the reinforcement layer (4) which is on the side opposite to the protective layer (7), and a decorative lining layer (6), situated on the barrier layer (5), defining a visible side.

The central layer (2) is in turn formed by fibrous material mats (1), which are only superficially coated with a thermosetting resin (3) and are successively arranged on top of one another, placed against one another in a coinciding position. Said fibrous material mats (1) can be made based on artificial virgin or recycled fibers, such as polyethylene terephthalate, polyamide, polypropylene, plant fibers, etc., previously being punched and/or thermobound.

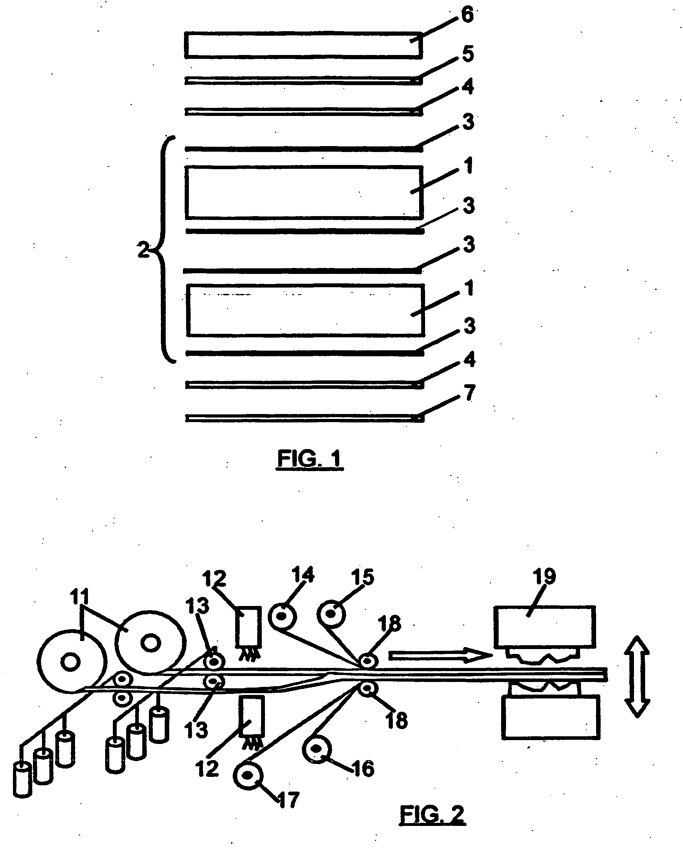

The manufacturing process of the stratified material of Figure 1 is described in reference to Figure 2.

The fibrous material mats (1) can be stored on reels (11) from which said mats are extracted in order to apply the thermosetting resin (3) on their two sides by means of a gluing roller (13). Then, the glass fiber reinforcing layer (4) is applied, which can be supplied in the form of loose fibers (12), in the form of a matting (17) or with any other arrangement or structure of fibers. On one side, a paper layer (16) is then applied, constituting the protective layer (7), Figure 1, which defines the non-visible side. On the opposite side, a strip or layer (14) constituting the barrier layer (5) of Figure 1 is applied on the reinforcement layer (4), on the surface of which barrier layer a layer (15) is applied constituting the decorative layer (6), which defines the visible side of Figure 1.

The stratified material, formed as described, can pass between press rolls (18), for example rubber rolls, which will allow that the thermosetting resin (3) supplied with the rolls (13) uniformly impregnate said stratified material.

Lastly, the formed stratified material will be molded in a press (19) at a temperature comprised between 120° and 190°C, and with a molding time comprised between 15 seconds and 180 seconds, for the purpose of achieving the desired shape, while at the same time the polymerization of the thermosetting resin causes the binding of the layers forming said stratified material.

In the stratified material manufacturing process, described in reference to Figure 2, the barrier layer (5), Figure 1, can be eliminated, depending on the type of decorative lining (6) used. The decorative lining (16), Figure 2, can be placed on the stratified material before or after the application of the press rolls (18).

The glass fibers (12) applied in the process described by Figure 2 can be replaced with natural fibers, such as jute, hemp, linen, sisal, etc., or applied in the form of a glass fiber mat.

Also in the process described in Figure 2, the press rolls (18) could be heated to achieve certain polymerization of the stratified material, shortening the forming time in the press (19) and at the same time preventing the reinforcement fibers (4), Figure 1, from coming loose.

## Claims

1. A manufacturing process of a headliner for interior automobile linings, comprising the formation of a stratified material including a central layer (2) of low density punched and/or thermobound fibrous material, a thermosetting resin (3), at least one protective layer (7) defining a non-visible side and at least one decorative lining layer (6) defining a visible side, the process comprising the following steps:
(i) obtaining a stratified material by means of a process including at least the following steps (a), (b) and (c):
(a) obtaining the central layer (2);
(b) applying at least one decorative layer (6) to define a visible side; and
(c) applying at least the protective layer (7) on the side of the stratified material opposite to said decorative layer (6);
**characterized in that**
the obtainment of the central layer (2) comprises the coinciding position overlay of at least two fibrous material mats (1), applying the thermosetting resin (3) on the two surfaces of each one of said fibrous material mats (1) such that only a superficial impregnation thereof is obtained; and **in that**
in a subsequent step (ii), the stratified material is passed through a press (19) at a sufficient temperature and pressure so as to obtain, simultaneously, the forming of said stratified material, as well as the binding of the layers constituting it, due to the polymerization of the thermosetting resin (3).

2. A process according to claim 1, **characterized in that** the fibrous material mats (1) forming the central layer (2) come from independent reels.

3. - A process according to claim 1, **characterized in that** the coinciding position overlay of all the fibrous material mats (1) forming the central layer (2) is achieved by successively folding a single fibrous material mat (1) over itself.

4. - A process according to claim 3, **characterized in that** the central layer (2) is cut in at least a direction parallel to the fold axis in a subsequent step.

5. - A process according to any of the previous claims, **characterized in that** at least one reinforcement layer (4) is added on at least one of the sides of the central layer (2).

6. - A process according to claim 5, **characterized in that** at least one of the reinforcement layers (4) is constituted of artificial fibers.

7. A process according to any of claims 5 and 6, **characterized in that** at least one of the reinforcement layers (4) is constituted of natural fibers.

8. - A process according to any of the previous claims, **characterized in that** before introducing the stratified material in the press (19), the stratified material is passed through press rolls (18).

9. A process according to any of the previous claims, **characterized in that** before applying the decorative layer (6), the stratified material is passed through press rolls (18).

10. A process according to any of claims 8 and 9, **characterized in that** the press rolls (18) used for partially pressing the stratified material are heated at a temperature that is sufficient to cause the partial polymerization of the thermosetting resin (3).

11. - A process according to any of the previous claims, **characterized in that** it comprises the step of applying, before the decorative layer (6), at least one barrier layer (5).

12. A process according to claim 11, **characterized in that** at least one of the barrier layers (5) is formed by an adhesive strip or sheet.

13. A process according to claim 12, **characterized in that** the decorative layer (6) binds to the stratified material by means of the melting of the barrier layer (5).

14. A process according to any of claims 1 to 10, **characterized in that** the decorative layer (6) adheres to the stratified material by means of thermosetting resin (3).

15. - A process according to any of the previous claims, **characterized in that** the protective layer (7) adheres to the stratified material by means of the thermosetting resin (3).

## Patentansprüche

1. Verfahren zur Herstellung von einem Dachhimmel für Kraftfahrzeug-Innenverkleidungen, umfassend die Bildung eines geschichteten Materials, darin eingeschlossen eine mittlere Schicht (2) eines gestanzten und/oder thermogebundenen Faserstoffes mit geringer Dichte, ein hitzehärtbares Harz (3), mindestens eine Schutzschicht (7), die eine nicht sichtbare Seite definiert, und mindestens eine dekorative Verkleidungsschicht (6), die eine sichtbare Seite definiert, wobei das Verfahren die folgenden Schritte umfasst:
(i) Erhalten eines geschichteten Materials mithilfe eine Verfahrens, das mindesten die folgenden Schritte (a), (b) und (c) einschließt:
(a) Erhalten der mittleren Schicht (2);
(b) Anbringen von mindestens einer dekorativen Schicht (6), um eine sichtbare Seite zu definieren; und
(c) Anbringen mindestens der Schutzschicht (7) auf der Seite des geschichteten Materials gegenüber der dekorativen Schicht (6);
**dadurch gekennzeichnet, dass**
die Herstellung der mittleren Schicht (2) die übereinstimmende Überlappung der Positionen von mindestens zwei Faserstoffmatten (1) umfasst, die Anbringung des hitzehärtbaren Harzes (3) auf den zwei Oberflächen jedes der Faserstoffmatten (1), so dass nur eine oberflächliche Durchdringung davon erzielt wird;
und **dadurch**, dass
in einem nachfolgenden Schritt (ii) das geschichtete Material durch eine Presse (19) mit einer ausreichenden Temperatur und einem ausreichenden Druck geführt wird, um gleichzeitig die Bildung des geschichteten Materials zu erhalten, ebenso wie die Bindung der Schichten, die es umfasst, aufgrund der Polymerisation des hitzehärtbaren Harzes.

2. Verfahren nach Anspruch 1, **dadurch gekennzeichnet, dass** die Faserstoffmatten (1), die die mittlere Schicht (2) bilden, aus voneinander unabhängigen Spulen stammen.

3. Verfahren nach Anspruch 1, **dadurch gekennzeichnet, dass** die übereinstimmende Überlappung der Positionen aller Faserstoffmatten (1), die die mittlere Schicht (2) bilden, durch die aufeinander folgende Faltung einer einzelnen Faserstoffmatte (1) auf sich selbst erhalten wird.

4. Verfahren nach Anspruch 3, **dadurch gekennzeichnet, dass** die mittlere Schicht (2) in mindestens einer Richtung, die parallel zur Faltachse in einem folgenden Schritt ist, geschnitten wird.

5. Verfahren nach jedem der vorhergehenden Ansprüche, **dadurch gekennzeichnet, dass** mindestens eine Verstärkungsschicht (4) mindestens einer der Seiten der mittleren Schicht (2) hinzugefügt wird.

6. Verfahren nach Anspruch 5, **dadurch gekennzeichnet, dass** mindestens eine der Verstärkungsschichten (4) aus künstlichen Fasern gebildet ist.

7. Verfahren nach jedem der Ansprüche 5 und 6, **dadurch gekennzeichnet, dass** mindestens eine der Verstärkungsschichten (4) aus natürlichen Fasern gebildet ist.

8. Verfahren nach jedem der vorhergehenden Ansprüche, **dadurch gekennzeichnet, dass** vor dem Einführen des geschichteten Materials in die Presse (19) das geschichtete Material durch Pressewalzen (18) geführt wird.

9. Verfahren nach jedem der vorhergehenden Ansprüche, **dadurch gekennzeichnet, dass** vor dem Anbringen der dekorativen Schicht (6) das geschichtete Material durch die Pressewalzen (18) geführt wird.

10. Verfahren nach jedem der Ansprüche 8 und 9, **dadurch gekennzeichnet, dass** die Pressewalzen (18), die verwendet werden, um das geschichtete Material teilweise zu pressen, auf eine Temperatur erhitzt werden, die ausreichend ist, um die teilweise Polymerisation des hitzehärtbaren Harzes (3) hervorzurufen (3).

11. Verfahren nach jedem der vorhergehenden Ansprüche, **dadurch gekennzeichnet, dass** es den Schritt des Anbringens mindestens einer Sperrschicht (5) vor der dekorativen Schicht (6) umfasst.

12. Verfahren nach Anspruch 11, **dadurch gekennzeichnet, dass** mindestens eine der Sperrschichten (5) durch einen Klebstreifen oder eine Klebefolie gebildet ist.

13. Verfahren nach Anspruch 12, **dadurch gekennzeichnet, dass** sich die dekorative Schicht (6) mithilfe des Schmelzens der Sperrschicht (5) an das geschichtete Material bindet.

14. Verfahren nach jedem der Ansprüche 1 bis 10, **dadurch gekennzeichnet, dass** die dekorative Schicht (6) mithilfe des hitzehärtbaren Harzes (3) am geschichteten Material haftet.

15. Verfahren nach jedem der vorhergehenden Ansprüche, **dadurch gekennzeichnet, dass** die Schutzschicht (7) mithilfe des hitzehärtbaren Harzes (3) am geschichteten Material haftet.

## Revendications

1. Un procédé de fabrication de garniture de pavillon pour le revêtement intérieur des véhicules, comprenant la formation d'un matériau stratifié constitué d'une couche centrale (2) de matériau fibreux perforé et/ou thermolié de basse densité, d'une résine thermodurcissable (3), d'au moins une couche protectrice (7) définissant une face non visible et d'au moins une couche de revêtement décorative (6) définissant une face visible, le procédé comprenant les étapes suivantes :
(i) obtenir un matériau stratifié au moyen d'un procédé comportant au moins les étapes (a), (b) et (c) suivantes :
(a) obtenir la couche centrale (2) ;
(b) appliquer au moins une couche décorative (6) pour définir une face visible ; et
(c) appliquer au moins la couche protectrice (7) sur la face du matériau stratifié opposée à ladite couche décorative (6) ;
**caractérisé en ce que**
l'obtention de la couche centrale (2) comprend la superposition d'au moins deux mats (1) en matériaux fibreux, en appliquant la résine thermodurcissable (3) sur les deux surfaces de chacun desdits mats (1) en matériau fibreux pour obtenir uniquement leur imprégnation superficielle ;
et **en ce que**
au cours d'une étape ultérieure (ii), le matériau stratifié est passé dans une presse (19) à une température et à une pression suffisantes de façon à obtenir, simultanément, le formage dudit matériau stratifié, ainsi que le liage des couches qui le constituent, du fait de la polymérisation de la résine thermodurcissable (3).

2. Un procédé selon la revendication 1, **caractérisé en ce que** les mats (1) en matériau fibreux formant la couche centrale (2) proviennent de bobines indépendantes.

3. Un procédé selon la revendication 1, **caractérisé en ce que** la superposition de tous les mats (1) en matériau fibreux formant la couche centrale (2) est obtenue en repliant successivement sur lui-même un unique mat (1) en matériau fibreux.

4. Un procédé selon la revendication 3, **caractérisé en ce que** la couche centrale (2) est coupée dans au moins un sens parallèle à l'axe de pliage au cours d'une étape ultérieure.

5. Un procédé selon quelconque des revendications précédentes, **caractérisé en ce qu'**une couche de renforcement (4) au moins est ajoutée sur au moins l'une des faces de la couche centrale (2).

6. Un procédé selon la revendication 5, **caractérisé en ce que** l'une au moins des couches de renforcement (4) est constituée de fibres artificielles.

7. Un procédé selon quelconque des revendications 5 et 6, **caractérisé en que** l'une au moins des couches de renforcement (4) est constituée de fibres naturelles.

8. Un procédé selon quelconque des revendications précédentes, **caractérisé en ce que**, avant d'introduire le matériau stratifié dans la presse (19), le matériau stratifié est passé dans des rouleaux presseurs (18).

9. Un procédé selon quelconque des revendications précédentes, **caractérisé en ce que**, avant d'appliquer la couche décorative (6), le matériau stratifié est passé dans des rouleaux presseurs (18).

10. Un procédé selon quelconque des revendications 8 et 9, **caractérisé en ce que** les rouleaux presseurs (18) utilisés pour presser partiellement le matériau stratifié sont chauffés à une température qui est suffisante pour provoquer la polymérisation partielle de la résine thermodurcissable (3).

11. Un procédé selon quelconque des revendications précédentes, **caractérisé en ce qu'**il comprend l'étape consistant à appliquer, avant la couche décorative (6), au moins une couche barrière (5).

12. Un procédé selon la revendication 11, **caractérisé en ce que** l'une au moins des couches barrières (5) est formée d'une bande ou d'une feuille adhésives.

13. Un procédé selon la revendication 12, **caractérisé en ce que** la couche décorative (6) est liée au matériau stratifié par la fonte de la couche barrière (5).

14. Un procédé selon quelconque des revendications 1 à 10, **caractérisé en ce que** la couche décorative (6) adhère au matériau stratifié à l'aide de la résine thermodurcissable (3).

15. Un procédé selon quelconque des revendications précédentes, **caractérisé en ce que** la couche protectrice (7) adhère au matériau stratifié à l'aide de la résine thermodurcissable (3).
